# EUROPEAN PATENT APPLICATION

(11) **EP 4 465 618 A1**
(43) Date of publication of application: **20.11.2024**
(21) Application number: 23213525.1
(22) Date of filing: 30.11.2023
(51) Int. Cl.: H04L 69/22

(54) **DATA ACQUISITION AND TRANSMISSION METHOD, VEHICLE CLOUD SERVICE PLATFORM, VEHICLE, AND STORAGE MEDIUM**

(30) Priority: 17.05.2023 CN 202310559947
(71) Applicant: Chongqing Changan Automobile Co Ltd, Chongqing 400023 (CN)
(72) Inventor: LAN, Wenliang, Chongqing, 400023 (CN); XIE, Lei, Chongqing, 400023 (CN); HUANG, Jun, Chongqing, 400023 (CN)
(74) Representative: Schulz Junghans Patentanwälte PartGmbB

(57) **Abstract**

A data acquisition and transmission method, a vehicle cloud service platform, a vehicle, and a storage medium are provided, belonging to the field of vehicle networking technology. The method includes: generating data acquisition and transmission configuration rules corresponding to different vehicle models; generating a serialized description file according to the data acquisition and transmission configuration rules, the data acquisition and transmission configuration rules applying to a vehicle; receiving and parsing a subscribed vehicle networking data message to obtain payload data; parsing the payload data according to a security and data volume control processing method to obtain serialized binary byte array data; and parsing the serialized binary byte array data according to a corresponding serialized description file to obtain a CAN signal and a corresponding signal value data set. This method generates data acquisition and transmission configuration rules corresponding to different vehicle models, and the acquired data can be flexibly configured. The acquired data is converted into serialized binary byte array data based on a serialized description file and then processed by security and data volume control to reduce its size.

## Description

### Field of the Invention

The present disclosure relates to the field of vehicle networking technology, and in particular to a vehicle networking data acquisition and transmission method, a vehicle cloud service platform, a vehicle, a vehicle networking data acquisition system, and a computer readable storage medium.

### Background of the Invention

At present, vehicle CAN is the most important source of data acquisition for intelligent and connected vehicles, after data acquisition, it is uploaded to the vehicle networking cloud platform (referred to as the vehicle cloud service platform), it is an important business in the vehicle networking, which plays an important role in vehicle driving condition monitoring and subsequent vehicle research and development quality improvement. In addition, the scale of intelligent and connected vehicles in the vehicle networking is usually above one million vehicles, different models may have different acquisition requirements, the acquired data items are not only numerous, but also have huge data capacity, this requires the acquisition cost and transmission cost as small as possible to realize the flexible acquisition and efficient transmission of vehicle data on the cloud.

An efficient data transmission method of Internet of things based on ProtoBuf is disclosed by Patent CN110943911, which uses MQTT's message publishing-subscribe mode, the message publisher serializes the payload of the MQTT message through ProtoBuf and then publishes the message; the message subscriber, after receiving the message, uses ProtoBuf to deserialize the payload to obtain the message. The patent mainly focuses on MQTT messages, uses software components generated by. Proto files which are predefined data structures, and performs ProtoBuf serialization and deserialization codec on the payload of MQTT messages to achieve data transmission. This method can only serialize and deserialize the data, which can reduce the data size to a certain extent, but the readability is poor, which is not conducive to reading and writing, and is not conducive to machine parsing.

### Summary of the Invention

One of the purposes of this application is to provide a vehicle networking data acquisition and transmission method, this method can generate data acquisition and transmission configuration rules corresponding to different vehicle types, the acquired data can be flexibly configured, the acquired data can be converted into serialized binary byte array data based on serialized description files, and then processed through security and data volume control to reduce the size of the data, improve the readability of the data, facilitate machine parsing, and improve data security; the second purpose is to provide a vehicle cloud service platform, and the third purpose is to provide a vehicle.

To achieve the above purposes, the technical scheme of this application is as follows.

A vehicle networking data acquisition and transmission method applied to the vehicle cloud service platform includes:
generating data acquisition and transmission configuration rules corresponding to different vehicle models;
generating a serialized description file according to the data acquisition and transmission configuration rules, and the data acquisition and transmission configuration rules applying to a vehicle;
receiving and parsing a subscribed vehicle networking data message to obtain payload data;
parsing the payload data according to a security and data volume control processing method to obtain serialized binary byte array data; and
parsing the serialized binary byte array data according to a corresponding serialized description file to obtain a CAN signal and a corresponding signal value data set.

According to the above technical means, the data acquisition and transmission configuration rules of different models can be flexibly configured, according to the received vehicle networking data message, the CAN signal and the corresponding signal value data set can be quickly parsed to improve the real-time performance of the data.

In the embodiment of this application, the parsing the payload data according to a security and data volume control processing method to obtain serialized binary byte array data includes:
performing, according to an encryption method flag byte and a compression method flag byte of the payload data, a corresponding decryption and decompression operation to obtain the serialized binary byte array data.

According to the above technical means, the serialized binary byte array data is encrypted and compressed, which can reduce the size of the data and ensure the security of the data, and according to the encryption method flag byte and the compression method flag byte for decryption and decompression, which ensures that the payload data can be correctly parsed.

In some embodiments of the present application, the parsing the serialized binary byte array data according to a corresponding serialized description file to obtain a CAN signal and a corresponding signal value data set includes:
dynamically parsing the serialized binary byte array data according to the corresponding serialized description file to obtain data exchange format data; and
converting the data exchange format data to obtain the CAN signal and the corresponding signal value data set.

According to the above technical means, the data exchange format data can be quickly parsed from the payload data, the data exchange format data is easy to be parsed by the machine, and the CAN signal and the corresponding signal value data set can be quickly converted to reduce the parsing error rate.

In some embodiments of this application, the generating data acquisition and transmission configuration rules corresponding to different vehicle models includes:
generating the data acquisition and transmission configuration rules corresponding to different vehicle models combined with CAN message management format files of different vehicle models.

The data acquisition and transmission configuration rules include: an acquisition upload behavior identification, a data upload condition, a data acquisition upload cycle, and a CAN signal list to be acquired.

According to the above technical means, the generated data acquisition and transmission configuration rules match the CAN message management format file of the vehicle model, which improves the accuracy of the data acquisition.

In some embodiments of this application, the generating a serialized description file according to the data acquisition and transmission configuration rules includes:
converting each acquisition upload behavior in the data acquisition and transmission configuration rules into an information object in the serialized description file;
converting a CAN signal list to be acquired in the data acquisition and transmission configuration rules into an attribute in the information object corresponding to the acquisition upload behavior; and
adding fixed description content to obtain a serialized description file that matches the data acquisition and transmission configuration rules.

According to the above technical means, the data acquisition and transmission configuration rules are converted into a serialized description file, which provides file support for subsequent data processing.

In some embodiments, the method further includes:
verifying an identity of the vehicle and agreeing on a communication mode before MQTT communication with the vehicle.

Through the above technical means, the security of the acquired data transmission process can be further guaranteed.

In some embodiments, the verifying an identity of the vehicle and agreeing on a communication mode includes:
parsing a login request sent from the vehicle to obtain an encryption method and a public key; and
generating a session key according to the encryption method, and using the public key to encrypt the session key and publish to the vehicle.

According to the above technical means, the identity authentication of the requester can be realized to ensure the security of data transmission.

The second aspect of the present disclosure provides a vehicle networking data acquisition and transmission method applied to a vehicle, and the method includes:
obtaining data acquisition and transmission configuration rules and a serialized description file of a vehicle model;
monitoring and acquiring a CAN message of the vehicle according to the data acquisition and transmission configuration rules and a CAN message management format file of the vehicle;
converting a CAN signal in an acquired CAN message and a corresponding signal value data set into serialized binary byte array data according to the serialized description file;
performing a security and data volume control processing on the serialized binary byte array data and constructing payload data; and
constructing a vehicle networking data message based on the payload data and publishing to a vehicle cloud service platform.

According to the above technical means, the data acquisition and transmission configuration rules of the vehicle can be flexibly changed, the acquired data is converted into serialized binary byte array data based on the serialized description file, the serialized binary byte array data is performed by the security and data volume control processing to reduce the amount of data that needs to be transmitted, the payload data constructed has a small amount of data and is easy to machine parsing.

In some embodiments, the converting a CAN signal in an acquired CAN message and a corresponding signal value data set into serialized binary byte array data according to the serialized description file includes:
converting the CAN signal in the acquired CAN message and the corresponding signal value data set into a data exchange format data corresponding to the serialized description file; and
converting the data exchange format data into serialized binary byte array data according to the serialized description file.

Through the above technical means, the serialized description file can be used to further reduce the data exchange format file.

In some embodiments, the converting the CAN signal in the acquired CAN message and the corresponding signal value data set into a data exchange format data corresponding to the serialized description file includes:
parsing the acquired CAN message into the CAN signal and a corresponding signal value data set when data uploading conditions in the data acquisition and transmission configuration rules are met; and
converting the CAN signal and the corresponding signal value data set into data exchange format data corresponding to the serialized description file.

According to the above technical means, the serialized description file can be used to convert the acquired CAN signal and the corresponding signal value data set into a data exchange format to reduce the amount of data.

In some embodiments, the converting the data exchange format data into serialized binary byte array data according to the serialized description file includes:
converting the data exchange format data into the serialized binary byte array data by using a dynamic parsing toolkit according to the serialized description file.

Through the above technical means, the data exchange format data is converted, and the conversion process is convenient and fast.

In some embodiments, the performing security and data volume control processing on the serialized binary byte array data and constructing payload data includes:
adding an encryption method flag byte and a compression method flag byte in a front end of the byte array of the serialized binary byte array data; and
performing compression followed by encryption according to a processing method defined by the encryption method flag byte and the compression method flag byte to obtain payload data.

According to the above technical means, the serialized binary byte array data is compressed and encrypted to further reduce the amount of data while ensuring data security.

In some embodiments, the monitoring and acquiring a CAN message of the vehicle according to the data acquisition and transmission configuration rules includes:
obtaining and parsing the CAN message management format file of the vehicle to obtain CAN matrix information;
parsing the data acquisition and transmission configuration rules to obtain an acquisition upload behavior and a CAN signal list to be acquired;
monitoring the CAN message on a CAN bus of the vehicle according to the CAN signal list to be acquired and the CAN matrix information; and
updating, if the monitored CAN message contains a signal in the CAN signal list to be acquired, a corresponding CAN message on a CAN message real-time board.

According to the above technical means, acquiring the required data the data according to the CAN message management format file and the data acquisition and transmission configuration rules, the acquired data is more targeted, the acquired target is clear, and the acquired data is updated on the CAN message real-time board, which is convenient to use according to the data upload conditions.

In some embodiments, the CAN message real-time board uses the Map data structure to cache data.

According to the above technical means, the data structure of Map data structure cache is simple and easy to read.

In some embodiments, the method further includes:
coping the Map data structure as a whole as a copy according to a preset time interval, and putting into an array queue according to the first-in-first-out method, and forming a CAN message snapshot set of vehicle data.

The CAN message snapshot set formed according to the above technical means can be used as the backup data reported after the fault occurs, which is convenient for analyzing and finding the fault.

In some embodiments, the method further includes:
logging in to the vehicle cloud service platform and agreeing on a communication mode before MQTT communication with the vehicle cloud service platform.

According to the above technical means, the security of data transmission can be guaranteed by logging in to the vehicle cloud service platform.

In some embodiments, the logging in to the vehicle cloud service platform and agreeing on a communication mode includes:
generating public-private key pairs based on an encryption method;
constructing and publishing a login request based on the encryption method and a public key; and
using a private key to decrypt the encrypted information received from the vehicle cloud service platform to obtain a session key and complete a login.

According to the above technical means, the authentication login can be realized to ensure the security of data transmission.

The third aspect of the present disclosure provides a vehicle cloud service platform configured with a processing unit, and the processing unit is configured to:
generate data acquisition and transmission configuration rules corresponding to different vehicle models;
generate a serialized description file according to the data acquisition and transmission configuration rules, the data acquisition and transmission configuration rules applying to a vehicle;
receive and parse a subscription vehicle networking data message to obtain payload data;
parse the payload data according to a security and data volume control processing method to obtain serialized binary byte array data; and
parse the serialized binary byte array data according to a corresponding serialized description file to obtain a CAN signal and a corresponding signal value data set.

According to the above technical means, the data acquisition and transmission configuration rules of different models can be flexibly configured, according to the received vehicle networking data message, the CAN signal and the corresponding signal value data set can be quickly parsed to improve the real-time performance of the data.

The fourth aspect of the present disclosure provides a vehicle configured with a processing unit, and the processing unit is configured to:
obtain data acquisition and transmission configuration rules and a serialized description file of a vehicle model;
monitor and acquire a CAN message of the vehicle according to the data acquisition and transmission configuration rules and a CAN message management format file of the vehicle;
convert a CAN signal in an acquired CAN message and a corresponding signal value data set into serialized binary byte array data according to the serialized description file;
perform security and data volume control processing on the serialized binary byte array data and construct payload data; and
construct a vehicle networking data message based on the payload data and publish to the vehicle cloud service platform.

According to the above technical means, the data acquisition and transmission configuration rules of the vehicle can be flexibly changed, the acquired data is converted into data exchange format data based on the serialized description file, which can reduce the amount of data that needs to be transmitted, and the payload data constructed has a small amount of data and is easy to machine parsing.

The fifth aspect of the present disclosure provides a vehicle networking data acquisition system, including a vehicle cloud service platform and a vehicle. The vehicle cloud service platform is configured to: generate data acquisition and transmission configuration rules corresponding to different vehicle models; and generate a serialized description file according to the data acquisition and transmission configuration rules;
the vehicle is configured to obtain data acquisition and transmission configuration rules and a serialized description file of a vehicle model; monitor and acquire a CAN message of the vehicle according to the data acquisition and transmission configuration rules and a CAN message management format file of the vehicle; convert a CAN signal in an acquired CAN message and a corresponding signal value data set into serialized binary byte array data according to the serialized description file; perform security and data volume control processing on the serialized binary byte array data and construct payload data; and construct a vehicle networking data message based on the payload data and publish to the vehicle cloud service platform; and
the vehicle cloud service platform receives and parses a subscription vehicle networking data message to obtain payload data; parses the payload data according to a security and data volume control processing method to obtain serialized binary byte array data; and parses the serialized binary byte array data according to a corresponding serialized description file to obtain a CAN signal and a corresponding signal value data set.

According to the above technical means, the data acquisition and transmission system can realize the flexible acquisition and efficient transmission of intelligent and networked vehicle data on the cloud, and the acquisition requirements can be changed in time.

The sixth aspect of the present disclosure provides a computer readable storage medium, the computer readable storage medium stores a computer program, when executed by the processor, the computer program implements the vehicle networking data acquisition and transmission method or implements the vehicle networking data acquisition and transmission method.

The beneficial effects of the present disclosure are as follows:
(1) The above methods can dynamically update the data acquisition and transmission configuration of the intelligent and connected vehicle, so that the data of the vehicle can be flexibly customized.
(2) The acquired data is converted into serialized binary byte array data based on serialized description files, and then the payload data is constructed through security and data volume control processing to reduce the size of the data, improve the readability of the data, be easy to machine parsing, and achieve safe and efficient transmission.

### Brief Description of the Drawings

Fig. 1 is a flowchart of a vehicle networking data acquisition and transmission method applied to the vehicle cloud service platform provided by an implementation of the present disclosure;
Fig. 2 is a flowchart of the serialized description file generated in a vehicle networking data acquisition and transmission method provided by an implementation of the present disclosure;
Fig. 3 is a flowchart of payload data parsing in a vehicle networking data acquisition and transmission method of the vehicle network provided by an implementation of the present disclosure;
Fig. 4 is a flowchart of a vehicle networking data acquisition and transmission method applied to a vehicle provided by an implementation of the present disclosure;
Fig. 5 is a schematic diagram of a vehicle acquisition data acquisition and transmission configuration rules and serialized description file in the vehicle networking data acquisition and transmission method provided by an implementation of the present disclosure;
Fig. 6 shows a flowchart of CAN message monitoring and acquisition in the vehicle networking data acquisition and transmission method provided by an implementation of the present disclosure;
Fig. 7 is a flowchart of converting the CAN signal and the corresponding signal value data set into a data exchange format data flow chart in the vehicle networking data acquisition and transmission method provided by an implementation of the present disclosure;
Fig. 8 is a schematic diagram of the MQTT message format in the vehicle networking data acquisition and transmission method provided by an implementation of the present disclosure;
Fig. 9 is a flow chart of constructing payload data in the vehicle networking data acquisition and transmission method provided by an implementation of the present disclosure;
Fig. 10 is a schematic diagram of the data processing process of MQTT message publishing-subscribe provided by an implementation of the present disclosure;
Fig. 11 is a schematic diagram of a data acquisition and transmission flow provided by an implementation of the present disclosure.

### Detailed Description of the Embodiments

The following will illustrate the embodiment of the disclosure with reference to the attached drawings and preferred embodiments. Technical personnel in this field can easily understand the other advantages and efficacy of the disclosure from the contents disclosed in this instruction. The present disclosure can also be implemented or applied through different specific implementations, the details in this instruction can also be modified or changed based on different viewpoints and disclosures without deviating from the spirit of the disclosure. It should be understood that the preferred embodiment is only to illustrate the disclosure, not to limit the scope of protection of the present disclosure.

It should be noted that the diagram provided in the following embodiments only illustrates the basic idea of the present disclosure in a schematic way, so the diagram only shows the components related to the present disclosure instead of drawing according to the number, shape and size of the components in the actual embodiment, the type, quantity and proportion of each component in the actual embodiment can be changed at will, and the layout of the components may be more complicated.

Interpretation: CAN protocol message, is a hexadecimal message sent and received on the vehicle CAN line (internal CAN, vehicle CAN, charging CAN), which is used for communication between different components in the vehicle. CAN protocol message is usually managed using DBC files or CAN matrix two-dimensional tables. Wherein, the syntax format of DBC file is:
BO _ Message ID (CANID) Message Name: message data length sending node
SG _ signal name: start bit| bit length@byte order symbol type (gain, bias) [minimum value | maximum value] 'unit' and receiving node.

The two-dimensional table format of CAN matrix is as follows:

| | | | | | | | | | | |
|---|---|---|---|---|---|---|---|---|---|---|
| Signal name | CAN ID | Cycle(ms) | Start bit | Bit length | Gain | Bias | Minimu m value | Maximu m value | Unit | Receiving node |

The CAN signal and signal value in the CAN bus of the vehicle are the main data sources for vehicle networking data acquisition.

Message Queue Telemetry Transport (MQTT) is a message protocol based on publish/subscribe paradigm under ISO standard (ISO/IEC PRF 20922). It works on the TCP/IP protocol family and is a publish/subscribe message protocol designed for remote devices with poor hardware performance and in case of poor network conditions.

The MQTT protocol is designed for the communication of remote sensors and control devices with a large number of limited computing power and working in low-bandwidth, unreliable networks, and it has the following main characteristics:
1. using publish/subscribe message mode, providing one-to-many message publishing and decoupling the disclosure program;
2. transmitting shielded messages message of payload content;
3. using TCP/IP to provide a network connection;
4. possessing three kinds of message publishing service quality; and
5. small transmission, the overhead is very small (fixed length of the head is 2 bytes, protocol exchange is minimized to reduce network traffic.

Protocol Buffer(ProtoBuf) is a mixed language data standard. By serializing structured data, it is used in communication protocols, data storage and other fields, and it is a language-independent, platform-independent and extensible serialized structural data format. ProtoBuf is a flexible, efficient, automated serialization method for structured data, and this method is similar to XML, but it is smaller (1/10-1/3), faster (20-100 times) and simpler than XML.

JavaScript Object Notation(JSON) is a lightweight data exchange format. It is based on a subset of ECMAScript (js specification established by the European Computer Manufacturers Association), and uses a text format completely independent of the programming language to store and represent data. The simple and clear hierarchy makes JSON an ideal data exchange language. It is easy for people to read and write, and it is also easy for machine to parse and generate.

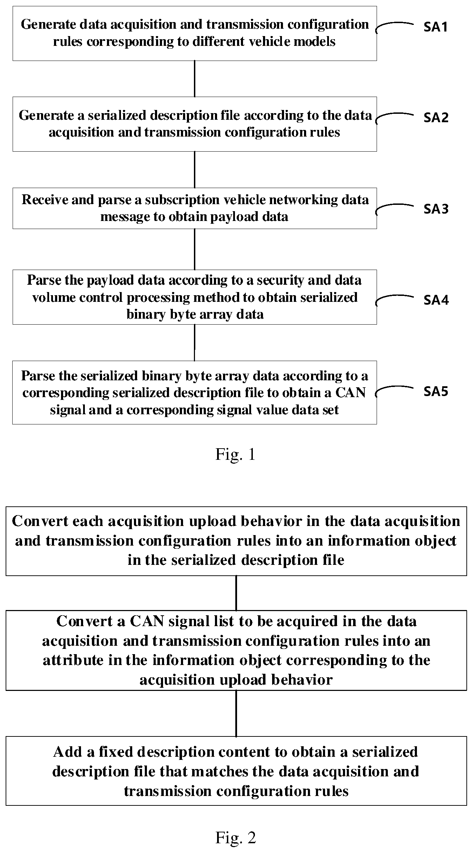

The first implementation of the present disclosure provides a vehicle networking data acquisition and transmission method applied to the vehicle cloud service platform, as shown in Fig. 1, and the method includes:
SA1: Generate data acquisition and transmission configuration rules corresponding to different vehicle models, in the embodiment of the present disclosure, generate data acquisition and transmission configuration rules corresponding to different vehicle models combining the CAN message management format files of different vehicle models. The data acquisition and transmission configuration rules corresponding to different vehicle models may set the acquired data differently. In the embodiment of the present disclosure, the CAN message management format file is mainly the aforementioned DBC file or CAN matrix two-dimensional table. The data acquisition and transmission configuration rules include: an acquisition upload behavior identification (an acquisition upload behavior is jointly agreed by the services and methods in the configuration rules), a data upload condition, a data acquisition and upload cycle, and a CAN signal list to be acquired. The data acquisition and transmission configuration rules generated in this way may match the CAN message management format file of the vehicle model, which improves the accuracy of the acquired data.
SA2: Generate a serialized description file according to the data acquisition and transmission configuration rules, and the data acquisition and transmission configuration rules applying to the vehicle.
SA3: Receive and parse a subscription vehicle networking data message to obtain payload data. In the embodiment of this application, the MQTT protocol is used to transmit the acquired data, the vehicle cloud service platform acts as a subscriber to the MQTT message during the data acquisition process, and subscribes the MQTT message published by the intelligent and connected vehicle from the MQTT Broker, according to the payload part of the subscribed MQTT message, the payload data may be obtained, that is, CAPayload format data.
SA4: Parse the payload data according to a security and data volume control processing method to obtain serialized binary byte array data.
SA5: Parse the serialized binary byte array data according to a corresponding serialized description file to obtain a CAN signal and a corresponding signal value data set.

According to the above technical means, the data acquisition and transmission configuration rules of different models may be flexibly configured, and according to the received vehicle networking data message, the CAN signal and the corresponding signal value data set may be quickly parsed to improve the real-time performance of the data.

In the embodiment of the present disclosure, the step of SA2 in generating a serialized description file according to the data acquisition and transmission configuration rules, as shown in Fig. 2, includes:
converting each acquisition upload behavior in the data acquisition and transmission configuration rules into an information object in the serialized description file;
converting a CAN signal list to be acquired in the data acquisition and transmission configuration rules into an attribute in the information object corresponding to the acquisition upload behavior; and
adding fixed description content to obtain a serialized description file that matches the data acquisition and transmission configuration rules. In the present disclosure, the fixed description content is used to assemble unified format transmission data, and the serialized description file in the present disclosure is the ProtoBuf description file.

According to the above technical means, the data acquisition and transmission configuration rules are converted into a serialized description file, which provides file support for subsequent data processing.

In the embodiment of the present disclosure, step SA4 specifically includes: performing the corresponding decryption and decompression operation to obtain serialized binary byte array data according to the CAPayload format data encryption method flag byte and compression method flag byte, that is, JSON2 PB data. In practical disclosures, CAPayload format data needs to be decrypted first and then decompressed. The specific decryption and decompression methods are determined according to the content of the encrypted byte and the compressed byte and the mapping relationship between the content and the processing method. JSON2 PB data is encrypted and compressed, which may reduce the size of the data and ensure the security of the data, and according to the encryption method flag byte and compression method flag byte for decryption and decompression, the CAPayload format data can be correctly parsed.

In the embodiment of the present disclosure, the CAPayload format data is binary data, and its byte [0] is encrypted tag (set to encryptFlag), byte [1] is compressed tag (set to zipFlag), and the remaining bytes byte [2]... [n] are data content (i.e., JSON2PB data). In an embodiment, when the byte [0] value of CAPayload data is 0, no decryption is performed; the value of byte [0] is 1, AES128 is used to decrypt JSON2PB data; when the value of byte [0] is 2, the JSON2 PB data is decrypted using SM4 national secret. Then, it is decompressed according to the compression method marked by byte [1], when the value of byte [1] is 0, it is not decompressed; and when the value of byte [1] is 1, the gzip algorithm is used to decompress the JSON2 PB data. The specific encryption and pressurization methods may be set according to the requirements.

In the embodiment of the present disclosure, step SA5 specifically includes: parsing the serialized binary byte array data dynamically to obtain data exchange format data according to the corresponding serialization description file. In the embodiment of the present disclosure, according to the corresponding ProtoBuf description file of the intelligent and networked vehicle, the ProtoBuf dynamic analysis technology is used to dynamically analyze the JSON2PB data to obtain the data exchange format data. In the embodiment of the present disclosure, the data exchange format data is JSON format data.

The data exchange format data is converted to obtain the CAN signal and the corresponding signal value data set. Thus, the cloud service obtains the CAN signal and its CAN signal value data set acquired by the intelligent and connected vehicle from the JSON data, and may carry out the vehicle networking data business processing.

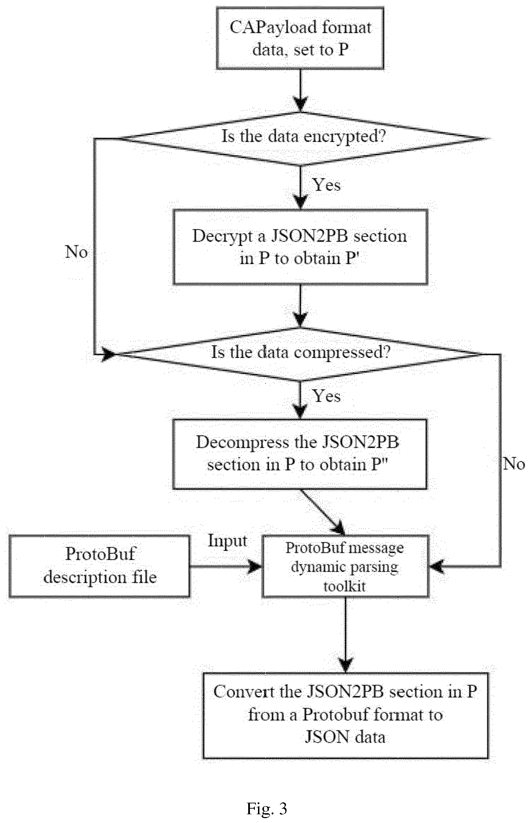

As shown in Fig. 3, assume that the CAPayload format data obtained by parsing is P, after parsing the CAPayload format data, firstly determine whether the data is encrypted, if it is encrypted, the JSON2PB segment in P is decrypted to obtain P', and then determine whether the data is compressed, if so, decompress the JSON2PB segment in P to obtain P" ; if there is no encryption, directly determine whether the data is compressed, if there is no compression, convert the JSON2PB segment of P" is into JSON data directly by using the ProtoBuf message dynamic parsing tools according to the ProtoBuf description file.

According to the above technical means, the data exchange format data can be quickly parsed from the CAPayload format data, the data exchange format data is easy to be parsed by the machine, and the CAN signal and the corresponding signal value data set may be quickly converted to reduce the parsing error rate.

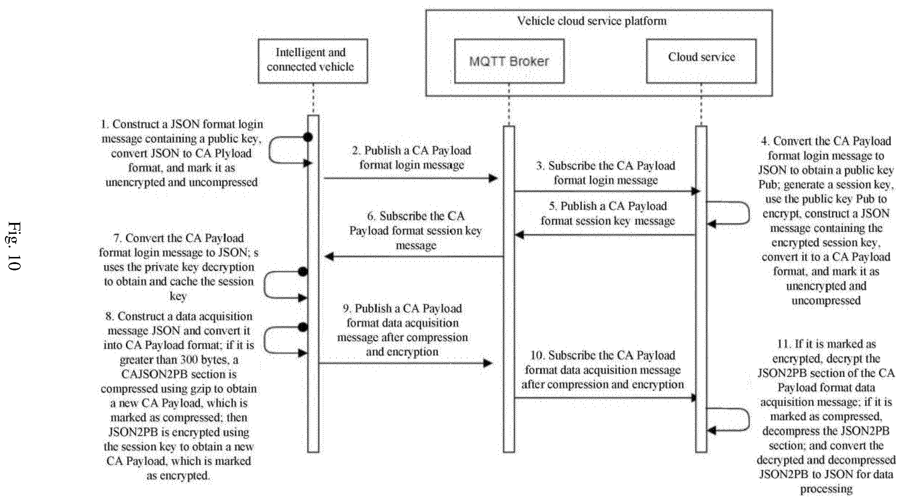

In the embodiment of the present disclosure, the method further includes:
verifying an identity of the vehicle and agreeing on a communication mode before MQTT communication with the vehicle, as shown in Fig. 10, specifically including:
parsing the login request sent from the vehicle to obtain an encryption method and a public key, in an embodiment, taking the encryption method a value of 1 and using the AES 128 algorithm to encrypt.

Generate the session key according to the encryption method, and use the public key to encrypt the session key and publish to the vehicle. In an embodiment, the AES128 key is generated as the session key.

According to the above technical means, the identity authentication of the requester may be realized to ensure the security of data transmission.

In the embodiment of the present disclosure, obtain a login request sent from the vehicle by the cloud subscription in the form of MQTT message, the byte [0] value of the CAPayload format data in the payload part of the MQTT message is 0, and the byte [1] value is 0, that is, not encrypted and not compressed. The session key encrypted by the public key is also converted into CAPayload format data that is not encrypted and not compressed, and is reversely published to the intelligent and connected vehicle through MQTT Broker.

Through the above technical means, the security of the collected data transmission process can be further guaranteed.

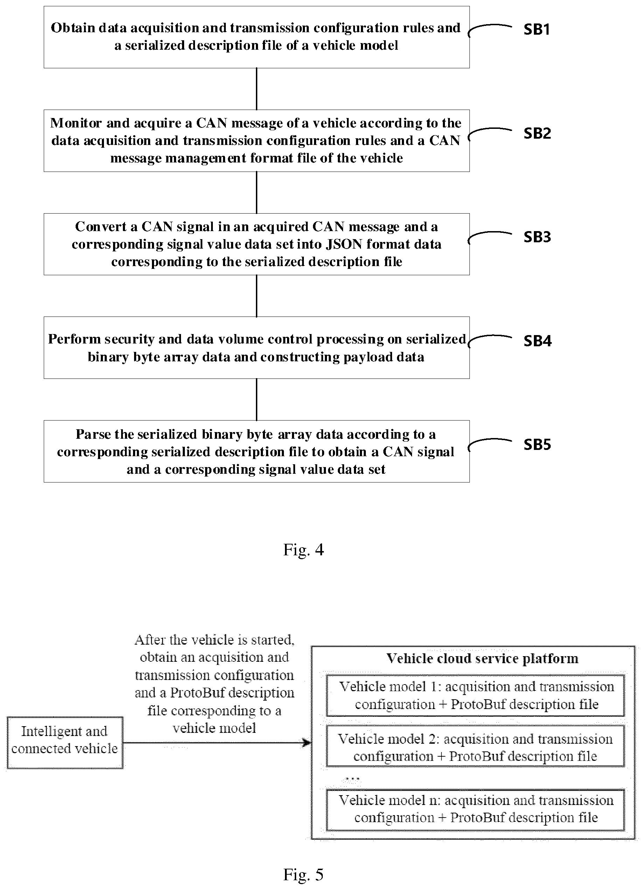

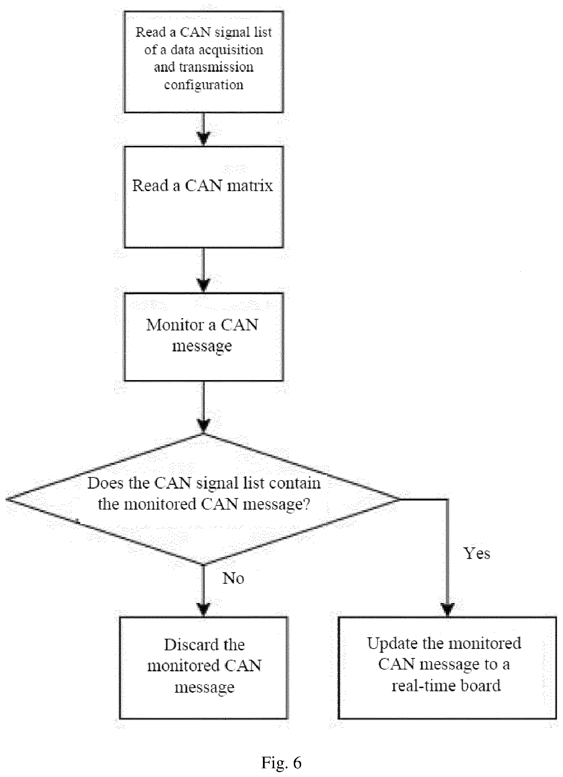

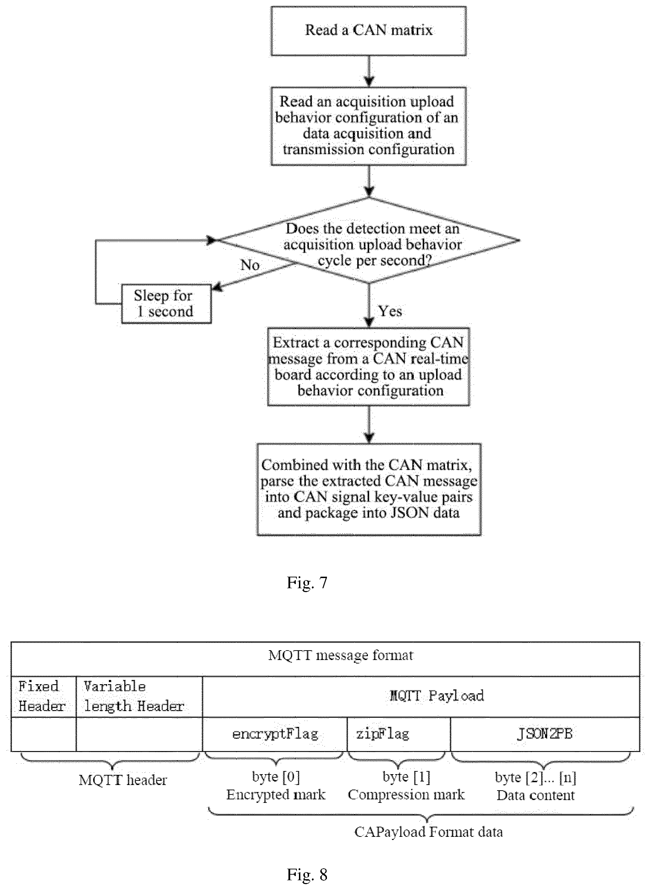

The second embodiment of the present disclosure provides a vehicle networking data acquisition and transmission method applied to the vehicle, as shown in Fig. 4, and the method includes:
SB1: Obtain the data acquisition transmission configuration rules and serialized description files of the vehicle models. In the embodiment of the present disclosure, as shown in Fig. 5, after the intelligent and networked vehicle is started by ignition, according to its vehicle model information, it is obtained or updated from the vehicle cloud platform to the matching data acquisition and transmission configuration rules and ProtoBuf description files, and stored locally in the vehicle.
SB2: Monitor and acquire the CAN message of the vehicle according to the data acquisition and transmission configuration rules and the CAN message management format file of the vehicle, as shown in Fig. 6, specifically including:
   obtaining and parsing the CAN message management format file of the vehicle to obtain CAN matrix information;
   parsing the data acquisition and transmission configuration rules to obtain an acquisition upload behavior and a CAN signal list to be acquired;
   monitoring the CAN message on a CAN bus of the vehicle according to the CAN signal list to be acquired and the CAN matrix information; and
   updating, if the monitored CAN message contains a signal in the CAN signal list to be acquired, a corresponding CAN message on a CAN message real-time board, discarding the monitored CAN message if the signal in the CAN signal list to be acquired is not included. In the embodiment of the present disclosure, the CAN message real-time board uses the Map data structure to cache data. The key of the Map data structure is CAN ID, and the value is CAN message. Meanwhile, the Map data structure is copied as a whole as a copy according to the preset time interval, and put into an array queue according to the first-in-first-out method to form a CAN message snapshot set of vehicle data. In the present disclosure, the preset time is 1 second. When meeting the level 3 alarm of the national standard of "Technical Specification for Remote Service and Management System of Electric Vehicles" (GB/T 32960), it is necessary to report the data of 30s before the time point of failure. At this time, the latest 30 snapshots in the CAN message snapshot set can be used as the vehicle condition data of the first 30s, combined with the DBC file or the CAN matrix file to analyze the CAN signal and its signal value data set and then report it. According to the above technical means, the required data may be acquired according to the CAN message management format file and the data acquisition and transmission configuration rules. The acquired data is more targeted, the acquired target is clear, and the acquired data is updated in the CAN message real-time board, which is convenient to use according to the data upload conditions.
SB3: Convert the CAN signal in the acquired CAN message and the corresponding signal value data set into serialized binary byte array data according to the serialized description file, specifically including:
   firstly, converting the CAN signal and the corresponding signal value data set in the acquired CAN message into data exchange format data corresponding to the serialized description file. As shown in Fig. 7, when the data upload conditions in the data acquisition and transmission configuration rules are met, all CAN messages in the CAN signal list to be acquired related to the acquisition and upload behavior are read from the CAN message real-time board according to the data upload conditions, and combined with the CAN matrix information, the CAN message is parsed into the CAN signal and the corresponding signal value data set. In the embodiment of the present disclosure, if the data upload condition is a preset cycle upload, the message is obtained and parsed according to the preset cycle. To determine whether the current data upload conditions are met, in practical disclosures, it is necessary to detect whether the acquisition upload behavior cycle is met per second, and if it is met, the corresponding CAN message is read from the CAN message real-time board according to the upload behavior configuration.

The CAN signal and the corresponding signal value data set are converted into data exchange format data corresponding to the serialized description file.

According to the above technical means, the serialized description file may be used to convert the acquired CAN signal and the corresponding signal value data set into a data exchange format to reduce the amount of data.

Then, according to the serialized description file, the data exchange format data is converted into serialized binary byte array data. In the embodiment of the present disclosure, according to the ProtoBuf description file stored in the intelligent networking vehicle, the Protobuf message dynamic analysis technology is used to convert the data exchange format data into the Protobuf binary byte array, which is JSON2PB format data.

SB4: Perform security and data volume control processing on serialized binary byte array data, and construct payload data, specifically including:
adding encryption method flag byte and compression method flag byte at the front end of the byte array of serialized binary byte array data. The new added byte [1] is used as the compression method to mark the bytes (set to zipFlag), the compression method takes the value of 0 to represent non-compression, and the value of 1 represents the use of gzip to compress the JSON2PB format data, and the compression method takes other values and can support more compression methods as needed. The added new byte [0] is used as an encryption method flag byte (set to encryptFlag), when the value of byte [0] is 0, it represents no encryption; when the value is 1, AES128 is used to encrypt JSON2 PB format data; when the value is 2, SM4 national secret is used to encrypt JSON2 PB format data; and when the encryption method takes other values, other more encryption methods may be used to encrypt JSON2PB format data as needed.

When the amount of data is less than 300 bytes, the compression will make the amount of data larger, therefore, in the actual disclosure process, if the data capacity of JSON2PB is less than 300 bytes, set byte [1] to 0; if JSON2 PB data is greater than 300 bytes, set byte [1] value 1, and perform gzip compression on JSON2 PB data.

The JSON2PB data is processed in the order of compression first and then encryption according to the encryption method flag byte and the compression method flag byte, and the final CAPayload format data is obtained.

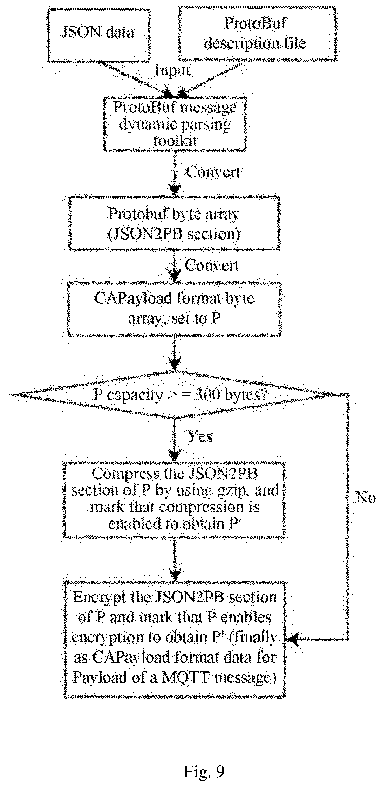

As shown in Fig. 9, after obtaining the JSON format data, the JSON format data and the ProtoBuf description file are input into the ProtoBuf message dynamic parsing toolkit, converted into JSON2PB segment, and then the JSON2PB segment is converted into CAPayload format data, assumed to be p, and then determine whether the capacity of p is greater than 300 bytes, if so, the JSON2PB segment of p is compressed using the defined compression method, and the compression is enabled by marking, for example, gzip compression, marked as 1, obtain P', then the JSON2 PB segment of P is encrypted, and P is marked with encryption enabled to obtain P", which is CAPayload format data.

SB5: Based on the payload data, the vehicle networking data message is constructed and published to the vehicle cloud service platform. In the embodiment of the present disclosure, the MQTT protocol is used to publish messages to the vehicle cloud platform. As the publisher of MQTT messages, the intelligent and connected vehicle constructs MQTT messages based on CAPayload format data and publishes MQTT Broker uploaded to the vehicle cloud platform. The MQTT message consists of a fixed header, a variable length header, and a payload. In the present disclosure, the CAPayload format data is published as the payload of the MQTT message, as shown in Fig. 8.

According to the above technical means, the data acquisition and transmission configuration rules of the vehicle may be flexibly changed, the acquired data is converted into JSON format data based on the serialized description file, which reduces transmitted amount of data, constructs CAPayload format data, the amount of data is small and easy to machine parsing.

In the embodiment of the present disclosure, the method further includes:
logging in to the vehicle cloud service platform and agreeing on a communication mode before MQTT communication with the vehicle cloud service platform, as shown in Fig. 10, specifically including:
generating the public-private key pairs based on an encryption mode, in the embodiment of the present disclosure, the intelligent and connected vehicle generates a public-private key pair based on RSA2048 or SM2 (where the public key is set to Pub).

Based on the encryption method and the public key, the login request is constructed and published, in the embodiment of the present disclosure, the encryption method and the public key Pub are published to the vehicle cloud platform by not compressing and not encrypting CAPayload format data for login. In an embodiment, the encryption mode takes value 1 and uses the AES 128 algorithm to encrypt.

Use a private key to decrypt the encrypted information received from the vehicle cloud service platform to obtain a session key and complete a login, and the session key is AES 128 key.

According to the above technical means, the authentication login may be realized to ensure the security of data transmission.

The third embodiment of the present disclosure provides a vehicle cloud service platform configured with a processing unit, and the processing unit is configured to:
generate data acquisition and transmission configuration rules corresponding to different vehicle models;
generate a serialized description file according to the data acquisition and transmission configuration rules, the data acquisition and transmission configuration rules applying to a vehicle;
receive and parse a subscription vehicle networking data message to obtain payload data;
parse the payload data according to a security and data volume control processing method to obtain serialized binary byte array data; and
parse the serialized binary byte array data according to a corresponding serialized description file to obtain a CAN signal and a corresponding signal value data set.

According to the above technical means, the data acquisition and transmission configuration rules of different models may be flexibly configured, according to the received vehicle networking data message, the CAN signal and the corresponding signal value data set can be quickly parsed to improve the real-time performance of the date.

The fourth embodiment of the present disclosure provides a vehicle configured with a processing unit, and the processing unit is configured to:
obtain data acquisition and transmission configuration rules and a serialized description file of a vehicle mode;
monitor and acquire a CAN message of the vehicle according to the data acquisition and transmission configuration rules and a CAN message management format file of the vehicle;
convert a CAN signal in an acquired CAN message and a corresponding signal value data set into serialized binary byte array data according to the serialized description file;
perform security and data volume control processing on the serialized binary byte array data and construct payload data; and
construct a vehicle networking data message based on the payload data and publish to the vehicle cloud service platform.

According to the above technical means, the data acquisition and transmission configuration rules of the vehicle may be flexibly changed, the acquired data is converted into data exchange format data based on the serialized description file, which may reduce the amount of data that needs to be transmitted, and the payload data constructed has a small amount of data and is easy to machine parsing.

The fifth embodiment of the present disclosure provides a vehicle networking data acquisition system, including a vehicle cloud service platform and a vehicle. The vehicle cloud service platform is configured to: generate data acquisition and transmission configuration rules corresponding to different vehicle models; and generate a serialized description file according to the data acquisition and transmission configuration rules;
the vehicle is configured to obtain data acquisition and transmission configuration rules and a serialized description file of a vehicle model; monitor and acquire a CAN message of the vehicle according to the data acquisition and transmission configuration rules and a CAN message management format file of the vehicle; convert a CAN signal in an acquired CAN message and a corresponding signal value data set into serialized binary byte array data according to the serialized description file; perform security and data volume control processing on the serialized binary byte array data and construct payload data; and construct a vehicle networking data message based on the payload data and publish to the vehicle cloud service platform; and
the vehicle cloud service platform receives and parses a subscription vehicle networking data message to obtain payload data; parses the payload data according to a security and data volume control processing method to obtain serialized binary byte array data; and parses the serialized binary byte array data according to a corresponding serialized description file to obtain a CAN signal and a corresponding signal value data set.

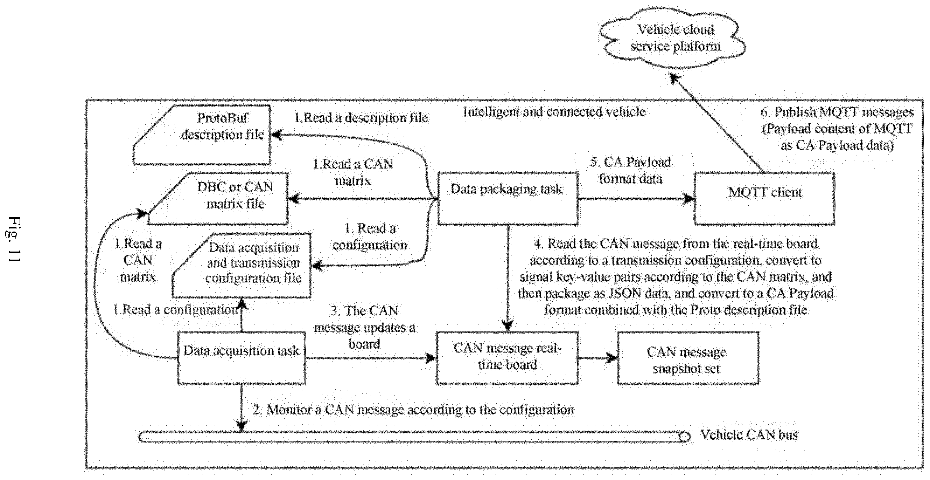

As shown in Fig. 11, after the intelligent and connected vehicle are started, it is obtained or updated from the vehicle cloud platform according to its vehicle models information to the matching data acquisition and transmission configuration rules and ProtoBuf description files, and stored locally in the car. After completing the data acquisition transmission configuration and the ProtoBuf description file update, the data acquisition task and the data packaging task will be constructed respectively.

Wherein, the workflow of the data acquisition task is as follows:
firstly, the CAN matrix information is read from the DBC or CAN matrix two-dimensional table in the vehicle, and the acquisition upload behavior and the CAN signal list to be acquired are read from the acquisition and transmission configuration rules, then, according to the CAN signal list to be acquired, combined with the CAN matrix information, the CAN message on the vehicle CAN bus is monitored, if the monitored CAN message contains the signal in the CAN signal list to be acquired, the corresponding CAN message is updated to the CAN message real-time board, and if the signal in the CAN signal list to be acquired is not included, the monitored CAN message is discarded. The CAN message real-time board uses the Map data structure to cache data. Meanwhile, according to the preset time interval, the Map data structure is copied as a whole as a copy, and put into an array queue according to the first-in-first-out method, forming a CAN message snapshot set of vehicle data.

The workflow of the data packaging task is as follows:
firstly, reading the CAN matrix information from the DBC or CAN matrix two-dimensional table in the car, reading an acquisition upload behavior, a data upload condition, a data acquisition and an upload cycle, CAN signal list to be acquired from the acquisition and transmission configuration rules, and reading the ProtoBuf description file; then, reading the CAN message from the real-time board according to the transmission configuration, converting it into signal key-value pairs according to the CAN matrix, packaging it into JSON data, and converting it into CAPayload format combined with the ProtoBuf description file, and sending the CAPayload format data to the MQTT client, the client constructing the MQTT message based on the CAPayload format data and publishing it to the vehicle cloud service platform.

According to the above technical means, the data acquisition and transmission system may realize the flexible acquisition and efficient transmission of intelligent and networked vehicle data on the cloud, and the acquisition requirements may be changed in time.

The sixth aspect of the present disclosure provides a computer readable storage medium, storing a computer program, which when executed by the processor, implements the vehicle networking data acquisition and transmission method or implements the vehicle networking data acquisition and transmission method.

The method provided by the present disclosure can realize the flexible collection and safe and efficient transmission of intelligent and connected vehicle data on the cloud, when the collection requirements change, the data collection and transmission configuration of the intelligent and connected vehicle may be dynamically updated, so that the data of the vehicle can be flexibly customized. The acquired data on the vehicle is transmitted by using the compressed and encrypted CAPayload format data transmission in MQTT, which not only ensures the safe transmission of data, but also effectively reduces the capacity of transmission data and realizes safe and efficient transmission. Compared with the transmission of JSON in MQTT or the national standard protocol transmission of "Technical Specification for Electric Vehicle Remote Service and Management System" (GB/T 32960), the data capacity is significantly reduced. After testing, the transmission of the same effective information can reduce the transmission capacity by about 70% compared with the JSON format, and may reduce the transmission capacity by about 15% compared with the national standard transmission protocol for new energy vehicles stipulated in the "Technical Specification for Electric Vehicle Remote Service and Management System" (GB/T 32960). The present disclosure is applied to the million-vehicle-level vehicle networking, which may effectively reduce the cost of data collection, development and transmission of intelligent and connected vehicles.

The above embodiments are only the better embodiments for fully explaining the disclosure, and the protection scope of the disclosure is not limited to this. The equivalent substitution or transformation made by the technical personnel in this technical field on the basis of the disclosure is within the scope of protection of the present disclosure.

## Claims

1. A vehicle networking data acquisition and transmission method, applied to a vehicle cloud service platform, wherein the method comprises:
generating data acquisition and transmission configuration rules corresponding to different vehicle models;
generating a serialized description file according to the data acquisition and transmission configuration rules, the data acquisition and transmission configuration rules applying to a vehicle;
receiving and parsing a subscribed vehicle networking data message to obtain payload data;
parsing the payload data according to a security and data volume control processing method to obtain serialized binary byte array data; and
parsing the serialized binary byte array data according to a corresponding serialized description file to obtain a CAN signal and a corresponding signal value data set.

2. The vehicle networking data acquisition and transmission method according to claim 1, wherein the parsing the payload data according to a security and data volume control processing method to obtain serialized binary byte array data comprises:
performing, according to an encryption method flag byte and a compression method flag byte of the payload data, a corresponding decryption and decompression operation to obtain the serialized binary byte array data.

3. The vehicle networking data acquisition and transmission method according to claim 1, wherein the parsing the serialized binary byte array data according to a corresponding serialized description file to obtain a CAN signal and a corresponding signal value data set comprises:
dynamically parsing the serialized binary byte array data according to the corresponding serialized description file to obtain data exchange format data; and
converting the data exchange format data to obtain the CAN signal and the corresponding signal value data set.

4. The vehicle networking data acquisition and transmission method according to claim 1, wherein the generating data acquisition and transmission configuration rules corresponding to different vehicle models comprises:
generating the data acquisition and transmission configuration rules corresponding to different vehicle models combined with CAN message management format files of different vehicle models; and
the data acquisition and transmission configuration rules comprising: an acquisition upload behavior identification, a data upload condition, a data acquisition upload cycle, and a CAN signal list to be acquired.

5. The vehicle networking data acquisition and transmission method according to claim 4, wherein the generating a serialized description file according to the data acquisition and transmission configuration rules comprises:
converting each acquisition upload behavior in the data acquisition and transmission configuration rules into an information object in the serialized description file;
converting a CAN signal list to be acquired in the data acquisition and transmission configuration rules into an attribute in the information object corresponding to the acquisition upload behavior; and
adding fixed description content to obtain a serialized description file that matches the data acquisition and transmission configuration rules.

6. The vehicle networking data acquisition and transmission method according to claim 1, wherein the method further comprises: verifying an identity of the vehicle and agreeing on a communication mode before MQTT communication with the vehicle.

7. The vehicle networking data acquisition and transmission method according to claim 6, wherein the verifying an identity of the vehicle and agreeing on a communication mode comprises:
parsing a login request sent from the vehicle to obtain an encryption method and a public key;
generating a session key according to the encryption method, and using the public key to encrypt the session key and publish to the vehicle.

8. A vehicle networking data acquisition and transmission method, applied to a vehicle, wherein the method comprises:
obtaining data acquisition and transmission configuration rules and a serialized description file of a vehicle model;
monitoring and acquiring a CAN message of the vehicle according to the data acquisition and transmission configuration rules and a CAN message management format file of the vehicle;
converting a CAN signal in an acquired CAN message and a corresponding signal value data set into serialized binary byte array data according to the serialized description file;
performing security and data volume control processing on the serialized binary byte array data and constructing payload data; and
constructing a vehicle networking data message based on the payload data and publishing to a vehicle cloud service platform.

9. The vehicle networking data acquisition and transmission method according to claim 8, wherein the converting a CAN signal in an acquired CAN message and a corresponding signal value data set into serialized binary byte array data according to the serialized description file comprises:
converting the CAN signal in the acquired CAN message and the corresponding signal value data set into a data exchange format data corresponding to the serialized description file; and
converting the data exchange format data into serialized binary byte array data according to the serialized description file.

10. The vehicle networking data acquisition and transmission method according to claim 9, wherein the converting the CAN signal in the acquired CAN message and the corresponding signal value data set into a data exchange format data corresponding to the serialized description file comprises:
parsing the acquired CAN message into the CAN signal and a corresponding signal value data set when data uploading conditions in the data acquisition and transmission configuration rules are met; and
converting the CAN signal and the corresponding signal value data set into data exchange format data corresponding to the serialized description file.

11. The vehicle networking data acquisition and transmission method according to claim 9, wherein the converting the data exchange format data into serialized binary byte array data according to the serialized description file comprises:
converting the data exchange format data into the serialized binary byte array data by using a dynamic parsing toolkit according to the serialized description file.

12. The vehicle networking data acquisition and transmission method according to claim 8, wherein the performing security and data volume control processing on the serialized binary byte array data and constructing payload data comprises:
adding an encryption method flag byte and a compression method flag byte in a front end of the byte array of the serialized binary byte array data; and
performing compression followed by encryption according to a processing method defined by the encryption method flag byte and the compression method flag byte to obtain payload data.

13. The vehicle networking data acquisition and transmission method according to claim 8, wherein the monitoring and acquiring a CAN message of the vehicle according to the data acquisition and transmission configuration rules comprises:
obtaining and parsing the CAN message management format file of the vehicle to obtain CAN matrix information;
parsing the data acquisition and transmission configuration rules to obtain an acquisition upload behavior and a CAN signal list to be acquired;
monitoring the CAN message on a CAN bus of the vehicle according to the CAN signal list to be acquired and the CAN matrix information; and
updating, if the monitored CAN message contains a signal in the CAN signal list to be acquired, a corresponding CAN message on a CAN message real-time board.

14. The vehicle networking data acquisition and transmission method according to claim 13, wherein the CAN message real-time board uses a Map data structure to cache data.

15. The vehicle networking data acquisition and transmission method according to claim 13, wherein the method further comprises:
coping the Map data structure as a whole as a copy according to a preset time interval, and putting into an array queue according to the first-in-first-out method, and forming a CAN message snapshot set of vehicle data.

16. The vehicle networking data acquisition and transmission method according to claim 8, wherein the method further comprises:
logging in to the vehicle cloud service platform and agreeing on a communication mode before MQTT communication with the vehicle cloud service platform.

17. The vehicle networking data acquisition and transmission method according to claim 16, wherein the logging in to the vehicle cloud service platform and agreeing on a communication mode comprises:
generating public-private key pairs based on an encryption method;
constructing and publishing a login request based on the encryption method and a public key;
using a private key to decrypt the encrypted information received from the vehicle cloud service platform to obtain a session key and complete a login.

18. A vehicle cloud service platform, configured with a processing unit, wherein the processing unit is configured to:
generate data acquisition and transmission configuration rules corresponding to different vehicle models;
generate a serialized description file according to the data acquisition and transmission configuration rules, the data acquisition and transmission configuration rules applying to a vehicle;
receive and parse a subscription vehicle networking data message to obtain payload data;
parse the payload data according to a security and data volume control processing method to obtain serialized binary byte array data; and
parse the serialized binary byte array data according to a corresponding serialized description file to obtain a CAN signal and a corresponding signal value data set.

19. A vehicle, configured with a processing unit, wherein the processing unit is configured to:
obtain data acquisition and transmission configuration rules and a serialized description file of a vehicle model;
monitor and acquire a CAN message of the vehicle according to the data acquisition and transmission configuration rules and a CAN message management format file of the vehicle;
convert a CAN signal in an acquired CAN message and a corresponding signal value data set into serialized binary byte array data according to the serialized description file;
perform security and data volume control processing on the serialized binary byte array data and construct payload data; and
construct a vehicle networking data message based on the payload data and publish to the vehicle cloud service platform.

20. A vehicle networking data acquisition system, wherein the system comprises a vehicle cloud service platform and a vehicle, and the vehicle cloud service platform is configured to: generate data acquisition and transmission configuration rules corresponding to different vehicle models; and generate a serialized description file according to the data acquisition and transmission configuration rules;
the vehicle is configured to obtain data acquisition and transmission configuration rules and a serialized description file of a vehicle model; monitor and acquire a CAN message of the vehicle according to the data acquisition and transmission configuration rules and a CAN message management format file of the vehicle; convert a CAN signal in an acquired CAN message and a corresponding signal value data set into serialized binary byte array data according to the serialized description file; perform security and data volume control processing on the serialized binary byte array data and construct payload data; and construct a vehicle networking data message based on the payload data and publish to the vehicle cloud service platform; and
the vehicle cloud service platform receives and parses a subscription vehicle networking data message to obtain payload data; parses the payload data according to a security and data volume control processing method to obtain serialized binary byte array data; and parses the serialized binary byte array data according to a corresponding serialized description file to obtain a CAN signal and a corresponding signal value data set.

21. A computer readable storage medium, storing a computer program which, when executed by the processor, implements the vehicle networking data acquisition and transmission method according to any of the claims 1-7 or implements the vehicle networking data acquisition and transmission method according to any of the claims 8-17.
